# FASCICULE DE BREVET EUROPEEN

(11) **EP 1 712 423 B1**
(45) Date de publication et mention de la délivrance du brevet: **12.12.2007**
(21) Numéro de dépôt: 06300265.3
(22) Date de dépôt: 22.03.2006
(51) Int. Cl.: B60R 13/00

(54) **Dispositif de décor de carrosserie**
Dekorationsvorrichtung für eine Karosserie
Decorative device for a vehicle body

(30) Priorité: 12.04.2005 FR 0503627
(43) Date de publication de la demande: 18.10.2006
(73) Titulaire: RENAULT S.A.S., 92100 Boulogne Billancourt (FR)
(72) Inventeur: Convers, Philippe, 78180, Guyancourt (FR); Perot, Patrick, 78960, Voisins le Bretonneux (FR); Gillet, Pascal, 78520, Limay (FR)

(56) Documents cités:
- DE-A1- 3 704 190
- GB-A- 1 285 356
- US-A- 1 627 802
- PATENT ABSTRACTS OF JAPAN vol. 009, no. 229 (M-413), 14 septembre 1985 (1985-09-14) & JP 60 085042 A (NISSAN JIDOSHA KK), 14 mai 1985 (1985-05-14)

## Description

L'invention se rapporte à un dispositif de décor de carrosserie, par exemple pour automobile, et notamment à la fixation d'un tel dispositif de décor sur une portière de coffre d'un véhicule automobile.

On connaît notamment des dispositifs de décor du type emblème de marque destinés à être fixés sur une automobile.

Notamment, il est connu des emblèmes de marque qui sont fixés sur la tôle de la carrosserie, au niveau de la porte du coffre, au moyen de tétines, classiquement quatre, réalisées sur l'emblème de marque et munies chacune d'un joint étanche à leur extrémité libre. Les tétines sont insérées par pression dans des trous correspondants prévus dans la tôle de la carrosserie dont le diamètre est légèrement inférieur au diamètre des joints étanches. Par ailleurs, pour assurer l'étanchéité du dispositif ainsi que son centrage, l'emblème est fixé par clippage sur un obturateur apte à coopérer avec un évidement circulaire ménagé dans la tôle du coffre. Ainsi, le montage du dispositif comprend les étapes suivantes :
- fixation de l'obturateur sur l'emblème ;
- mise en place de l'obturateur sur la porte du coffre du véhicule automobile ;
- fixation de l'ensemble par clippage des quatre tétines, l'une après l'autre.
Le montage du dispositif comprend donc six gestes opératoires ce qui rend le processus long et peu pratique.

Par ailleurs, il est connu de DE 37 04190 A1, un emblème de marque pour véhicule automobile présentant des tétines de fixation pouvant être insérées dans des trous de la carrosserie correspondants, l'emblème étant destiné à être inséré dans un renfoncement de la carrosserie sensiblement adapté aux contours de l'emblème. L'emblème est fixé au moyen de tétines présentes sur l'emblème qui sont montées clippées dans des trous de la tôle de la porte du coffre du véhicule automobile. Entre la tôle et l'emblème est disposé un support en forme de demi coque, dont les bords suivent sensiblement les bords du renfoncement de la carrosserie. Le support est en matériau plastique élastique et présente une lèvre d'étanchéité dépassant radialement de l'emblème. L'étanchéité du dispositif est assurée par la lèvre dépassant radialement l'emblème, en appui sur le bord du renfoncement. Afin de maintenir la lèvre en position, celle-ci présente un bossage coopérant avec une gorge circulaire réalisée sur l'emblème.

Ainsi, le montage d'un tel dispositif comporte encore cinq gestes opératoires. De plus, le dispositif nécessite une adaptation en fonction du renfoncement prévu pour la carrosserie afin que la lèvre soit bien pincée entre l'emblème et le bord du renfoncement de la carrosserie.

Le but de l'invention est de proposer un dispositif de décor dont le montage est rapide et permet cependant d'assurer l'étanchéité du dispositif, notamment sans nécessiter obligatoirement d'être monté dans un renfoncement de la surface de fixation.

On atteint ce but de l'invention au moyen d'un dispositif de décor de carrosserie, notamment pour véhicule automobile, apte à être fixé sur une surface de fixation sensiblement plane, remarquable en ce qu'il comporte un élément de décor, un support, des premiers moyens de fixation rapide dudit élément de décor sur ledit support, ledit support présentant sur une face sensiblement plane, destinée à être en vis-à-vis de ladite surface de fixation, des seconds moyens de fixation rapide dudit support sur ladite surface de fixation et une lèvre d'étanchéité entourant lesdits seconds moyens de fixation.

Ainsi, avantageusement, l'élément de décor est fixé sur le support à l'aide des premiers moyens de fixation rapide, puis le support est fixé à la tôle au moyen des seconds moyens de fixation rapide. Le montage du dispositif est ainsi rapide et aisé. La lèvre d'étanchéité entourant les seconds moyens de fixation rapide du support sur la tôle assure l'étanchéité d'une zone étanche autour des seconds moyens de fixation rapide.

De préférence, ledit élément de décor présente un logement délimité par un rebord dans lequel ledit support est apte à être monté serré.

Ainsi, de manière avantageuse, le montage de l'élément de décor sur le support est réalisé rapidement et de manière efficace.

De manière préférée, ledit rebord présente des bossages aptes à coopérer avec des languettes élastiques réalisées sur ledit support et formant bourrelets.

Ainsi, avantageusement, le serrage du support dans le logement du décor n'est pas réalisé sur toute la périphérie du support mais uniquement au niveau des languettes élastiques. Le montage serré du support dans le logement ménagé dans l'élément de décor s'en trouve facilité.

De préférence, ledit élément de décor présente des évidements ménagés dans ledit rebord, ledit support présentant des angles conformés pour être montés serrés dans lesdits évidements.

Ainsi, le montage du support dans le logement du décor est serré également au niveau d'angles du support, permettant une meilleure fixation. De plus, avec de tels évidements, le positionnement du dispositif est plus aisé.

De manière préférée, ledit support est fixé à ladite surface de fixation au moyen d'au moins une projection élastique anti-retour apte à coopérer avec un trou traversant ménagé dans ladite surface de fixation. De préférence encore, ledit support présente quatre projections élastiques anti-retour aptes à coopérer chacune avec un trou traversant ménagé dans ladite surface de fixation.

Ainsi, avec au moins une projection élastique anti-retour le montage du support sur la tôle est réalisé de manière rapide et aisée par clippage. Avec quatre telles projections, la fixation est plus efficace et le dispositif plus stable.

De manière préférée, ledit support présente deux languettes élastiques de centrage aptes à coopérer avec un même trou traversant ménagé dans ladite surface de fixation.

Ainsi, avantageusement, ces languettes élastiques de centrage permettent de centrer le dispositif par rapport aux différents trous ménagés dans la tôle avec lesquels il doit coopérer. Le montage du dispositif sur la tôle est donc facilité.

De préférence, ladite lèvre d'étanchéité est réalisée en une pièce avec ledit support, avantageusement, injectée par co-moulage de matière plastique sur ledit support.

Ainsi, de manière avantageuse, la lèvre est aisée à réaliser.

D'autres caractéristiques et avantages de l'invention apparaîtront de l'examen de la description qui va suivre, proposée à titre illustratif et non limitatif en regard des figures ci-annexées, sur lesquelles :
- la figure 1 représente une vue de dessous du dispositif selon l'invention ;
- les figures 2 et 3 représentent des vues en coupe du dispositif de la figure 1, respectivement selon la coupe A-A et le plan de coupe B-B.

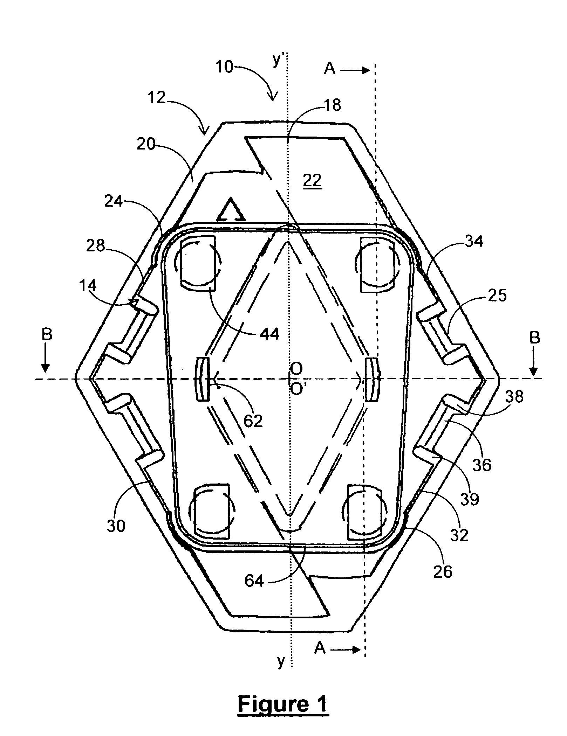

La figure 1 représente une vue de dessous du dispositif de décor 10 selon l'invention, ce dispositif pouvant notamment être utilisé sur un véhicule automobile. En effet, le dispositif 10 est destiné à être fixé sur une surface de fixation sensiblement plane, comme par exemple la tôle d'une porte de coffre d'un véhicule automobile.

Ce dispositif 10 comporte un élément de décor 12, en l'espèce un emblème de marque, et un support 14.

En l'espèce, l'emblème de marque 12 a une forme générale de losange, mais, bien entendu, l'invention ne se réduit pas aux seuls emblèmes en forme de losange mais se rapporte au contraire à tout dispositif de décor pour véhicule automobile, apte à être fixé sur la carrosserie, et présentant une forme géométrique quelconque.

L'emblème 12 présente ainsi une première face libre 16 représentant en l'espèce le logo d'une marque de constructeur automobile et une seconde face 18 apte à être mise en vis-à-vis du support 14. Sur cette deuxième face 18, l'emblème présente un rebord 20 délimitant un logement 22 prévu dans l'emblème 12 pour coopérer avec le support 14. Le rebord 20 présente de plus quatre évidements 24 en forme d'arcs de cercle. En l'espèce, les évidements 24 sont opposés deux à deux par rapport au centre O de l'emblème. Cependant, comme montré sur la figure 1, ces évidements 24, bien que disposés de manière symétrique par rapport à l'axe vertical y-y' de la figure 1, ne sont pas, en l'espèce, disposés de manière symétrique par rapport au centre O de l'emblème afin de réaliser un détrompeur, le montage du dispositif de telle sorte que l'emblème soit mal orienté, étant ainsi empêché. Bien que ce nombre et cette disposition des évidements 24 soient préférés, toute disposition selon laquelle au moins un évidement est disposé opposé à au moins un autre évidement est également envisageable. De même, ces évidements peuvent prendre d'autres formes comme par exemple la forme d'un angle vif. Le rebord 20 présente de plus des bossages 25, qui sont, en l'espèce, au nombre de quatre, opposés deux à deux par rapport au centre O de l'emblème. Ces bossages sont réalisés par épaississement local du rebord 20.

Le support 14 est conformé pour s'ajuster, au moins partiellement, dans le logement 22 ménagé dans l'emblème 12. Ainsi, le support 14 a, en l'espèce, sensiblement la forme d'un hexagone. Bien entendu, la forme de ce support 14 doit être adaptée en fonction de la forme de l'emblème 12. Le support 14 présente quatre angles arrondis 26 aptes à être insérés serrés dans les évidements 24 ménagées dans le rebord 20 de l'emblème 12. Par ailleurs, sur quatre bords 28, 30, 32, 34 du support 14 destinés à coopérer avec le rebord 20 de l'emblème, une languette élastique 36 formant bourrelet, est ménagée, délimitée par deux fentes 38, 39 réalisées, en l'espèce, en forme de « U ».

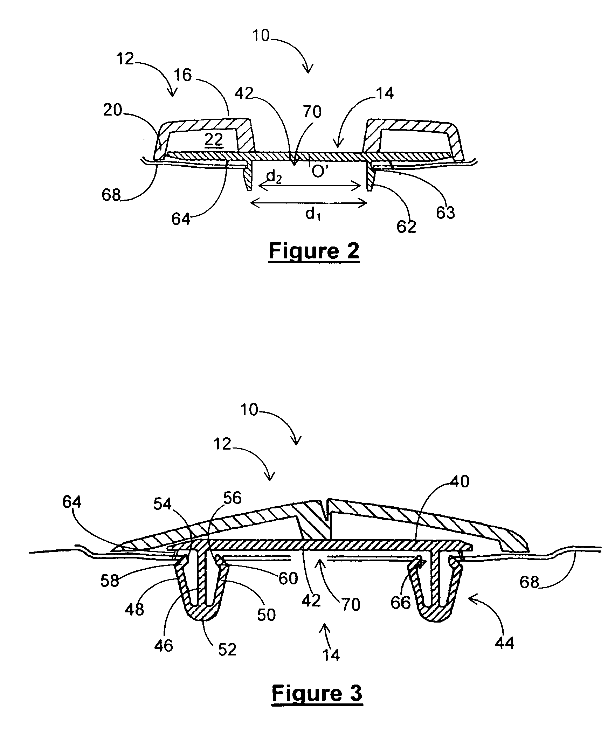

Le support 14 présente deux faces 40, 42 sensiblement parallèles. La première face 40 est sensiblement plane, libre et destinée à être en vis-à-vis de l'emblème 12 lorsque celui-ci est monté sur le support 14. La seconde face 42 est destinée à être en vis-à-vis de la surface de fixation. Quatre projections élastiques anti-retour 44 sont prévues sur cette seconde face 42, à proximité des angles arrondis 26. En l'espèce, ces projections anti-retour 44 sont formés par une branche principale 46 s'étendant depuis la seconde face 42 du support 14, sensiblement perpendiculairement au support 14, et de deux branches secondaires, symétriques 48, 50 par rapport à la branche principale 46 et réunies à l'extrémité libre 52 de la branche principale 46. Les deux branches symétriques 48, 50 réalisent une forme de tête de flèche dans la coupe selon A-A de la figure 3 et s'étendent perpendiculairement de part et d'autre du plan de cette figure. De plus, les branches secondaires 48, 50 comportent, à proximité de leur extrémité 54, 56, une partie 58, 60 inclinée vers la branche principale 46.

Le support 14 présente de plus deux languettes élastiques de centrage 62 disposées à proximité du centre O' du support, opposées par rapport à O'. En l'espèce, ces languettes de centrage 62 s'étendent principalement, dans leur position de repos, sensiblement perpendiculairement au support 14. Ces languettes de centrage 62 sont aptes à être inclinées temporairement par rapport à leur position de repos et présentent chacune une butée 63. Les languettes de centrage 62 s'étendent, par ailleurs, sensiblement perpendiculairement de part et d'autre du plan de coupe B-B de la figure 2.

Enfin, une lèvre d'étanchéité 64 s'étend sur la seconde face 42 du support 14, de telle sorte que les projections élastiques anti-retour 44 et les languettes élastiques de centrage 62 sont entourées par cette lèvre d'étanchéité 64. Il est à noter que cette lèvre d'étanchéité présente une forme de trapèze dont la grande base est destinée à être orientée vers le haut lorsque le dispositif d'emblème 10 est fixé sur la surface de fixation. Cette forme de la lèvre d'étanchéité est déduite de la disposition des évidements 24 ménagés dans le rebord 20 de l'emblème 12 et donc, également, de la disposition des projections élastique anti-retour 44. En l'espèce, la lèvre 64 est réalisée en une pièce avec le support 14, injectée par co-moulage de matière plastique sur le support 14. Ainsi, la lèvre d'étanchéité 64 est de réalisation aisée.

Le montage et les avantages du dispositif 10 qui vient d'être décrit résultent directement de la description qui précède.

Ainsi, la première étape du montage du dispositif de décor 10 sur la surface de fixation consiste à fixer le support 14 à l'emblème 12. Cette fixation est réalisée en enclenchant, en force, le support 14 dans le logement 22 ménagé dans l'emblème 12, et notamment les angles arrondis 26 du support 14 dans les évidements 24 de l'emblème 12. De plus, au cours de cet enclenchement, les bossages 25 de l'emblème 12 viennent en appui sur les languettes formant bourrelets 36 du support 14. L'emblème 12 est ainsi clippé sur le support 14.

La deuxième étape du montage consiste à insérer les projections anti-retours 44 dans des trous traversant 66 prévus à cet effet dans la tôle 68. On réalise l'insertion des quatre projections anti-retours 44 en un seul temps de montage. Au cours de cette insertion, les projections anti-retours 44 sont tout d'abord déformées de telle sorte que les deux bras secondaires 48, 50 qui les composent se rapprochent l'un de l'autre. Lorsque les projections anti-retours 44 sont insérées assez en profondeur dans les trous 66 pour que leur section de plus grand diamètre ait franchi le plan des trous 66, les projections anti-retours 44 se déforment de telle sorte que les bras secondaires 48, 50 s'éloignent du bras principal 46, de telle sorte qu'un enlèvement des projections anti-retours 44 est empêché par les parties inclinées 58, 60 des bras secondaires 48, 50 qui jouent le rôle du butée sur le bord des trous 66 ménagés dans la tôle 68. Le support 14 est ainsi clippé sur la tôle 68.

L'insertion des projections anti-retours 44 dans les trous 66 est également facilitée par la présence des languettes de centrage 62 qui, en étant insérée dans un trou 70 dont le diamètre d₁ est sensiblement égal à la distance d₂ entre les deux languettes élastiques de centrage 62, permettent d'aligner le dispositif 10 et notamment les projections anti-retour 44 par rapport aux trous 66 ménagés dans la tôle 68.

L'étanchéité du montage est assurée grâce à la lèvre d'étanchéité 64, plaquée contre la tôle 68, qui définit ainsi une zone étanche dans laquelle se trouvent notamment les projections anti-retours 44, les languettes élastiques de centrage 62 et les trous 66, 70 ménagés dans la tôle 68.

Par ailleurs, le montage du dispositif sur la surface de fixation est réalisé en deux temps seulement. Le gain de temps par rapport aux dispositifs connus est donc important.

Bien évidemment la présente invention ne se réduit pas au seul mode de réalisation décrit ici à titre d'exemple illustratif mais non limitatif.

En outre, on peut envisager de faire varier le nombre, la disposition et/ou la forme des projections élastiques anti-retour sans sortir du cadre de l'invention.

De plus, la fixation par clippage de l'emblème sur le support à l'aide des languettes formant bourrelets ménagées sur le support et des bossages de l'élément de décor peut être remplacée par d'autres moyens de fixation rapide. On peut par exemple disposer à la place des languettes des dispositifs de clip coopérant avec des dispositifs complémentaires prévus sur l'élément de décor. On peut également envisager, à titre d'exemples non limitatifs, une fixation à l'aide d'un dispositif du type à baïonnette, d'un dispositif du type à vis quart de tour ou d'un quelconque dispositif équivalent.

De même, la fixation par clippage du support sur la surface de fixation peut être remplacée par d'autres moyens de fixation rapide, comme, à titre d'exemples illustratifs, au moyen d'un dispositif du type à baïonnette, d'un dispositif du type à vis quart de tour ou d'un quelconque dispositif équivalent.

Un tel dispositif, mis en oeuvre ici dans le cas d'une tôle sensiblement plane, peut, bien évidement, également être mis en oeuvre sur une tôle présentant un renfoncement.

Enfin, un tel dispositif peut être mis en oeuvre pour tout dispositif de décor fixé sur la carrosserie d'une automobile.

## Revendications

1. Dispositif (10) de décor de carrosserie, notamment pour véhicule automobile, apte à être fixé sur une surface de fixation (68) sensiblement plane, comportant un élément de décor (12) et un support (14), **caractérisé par** des premiers moyens de fixation rapide dudit élément de décor (12) sur ledit support (14), ledit support (14) présentant sur une face sensiblement plane (42), destinée à être en vis-à-vis de ladite surface de fixation (68), des seconds moyens de fixation rapide dudit support (14) sur ladite surface de fixation (68) et une lèvre d'étanchéité (64) entourant lesdits seconds moyens de fixation.

2. Dispositif (10) selon la revendication 1, **caractérisé en ce que** ledit élément de décor (12) présente un logement (22) délimité par un rebord (20) dans lequel ledit support (14) est apte à être monté serré.

3. Dispositif (10) selon la revendication 2, **caractérisé en ce que** ledit rebord (20) présente des bossages (25) aptes à coopérer avec des languettes élastiques (36) réalisées sur ledit support (14) et formant bourrelets.

4. Dispositif (10) selon l'une des revendications 1 à 3, **caractérisé en ce que** ledit élément de décor (12) présente des évidements (24) ménagés dans ledit rebord (20), ledit support (14) présentant des angles (26) conformés pour être montés serrés dans lesdits évidements (24).

5. Dispositif (10) selon l'une quelconque des revendications précédentes, **caractérisé en ce que** ledit support (14) est fixé à ladite surface de fixation (68) au moyen d'au moins une projection élastique anti-retour (44) apte à coopérer avec un trou traversant (66) ménagé dans ladite surface de fixation (68).

6. Dispositif (10) selon la revendication 5, **caractérisé en ce que** ledit support (14) présente quatre projections élastiques anti-retour (44) aptes à coopérer chacune avec un trou traversant (66) ménagé dans ladite surface de fixation (68).

7. Dispositif (10) selon l'une quelconque des revendications précédentes, **caractérisé en ce que** ledit support (14) présente deux languettes élastiques de centrage (62) aptes à coopérer avec un même trou traversant (70) ménagé dans ladite surface de fixation (68).

8. Dispositif (10) selon l'une quelconque des revendications précédentes, **caractérisé en ce que** ladite lèvre d'étanchéité (64) est réalisée en une pièce avec ledit support (14).

9. Dispositif (10) selon la revendication 8, **caractérisé en ce que** ladite lèvre (64) est injectée par co-moulage de matière plastique sur ledit support (14).

## Claims

1. Bodywork decorative device (10), particularly for a motor vehicle, able to be attached to a substantially flat attachment surface (68), comprising a decorative element (12) and a support (14), **characterized by** first means of rapid attachment of the said decorative element (12) to the said support (14), the said support (14) having on a substantially flat face (42), intended to face the said attachment surface (68), second means of rapid attachment of the said support (14) to the said attachment surface (68) and a sealing lip (64) surrounding the said second attachment means.

2. Device (10) according to Claim 1, **characterized in that** the said decorative element (12) has a housing (22) delimited by a rim (20) into which the said support (14) can be fitted tightly.

3. Device (10) according to Claim 2, **characterized in that** the said rim (20) has bosses (25) able to collaborate with elastic tabs (36) made on the said support (14) and forming bulges.

4. Device (10) according to one of Claims 1 to 3, **characterized in that** the said decorative element (12) has recesses (24) formed in the said rim (20), the said support (14) having corners (26) which are shaped to be fitted tightly into the said recesses (24).

5. Device (10) according to any one of the preceding claims, **characterized in that** the said support (14) is attached to the said attachment surface (68) by means of at least one elastic non-return projection (44) able to collaborate with a through-hole (66) formed in the said attachment surface (68).

6. Device (10) according to Claim 5, **characterized in that** the said support (14) has four elastic non-return projections (44) each designed to collaborate with a through-hole (66) formed in the said attachment surface (68).

7. Device (10) according to any one of the preceding claims, **characterized in that** the said support (14) has two elastic centring tabs (62) designed to collaborate with one and the same through-hole (70) formed in the said attachment surface (68).

8. Device (10) according to any one of the preceding claims, **characterized in that** the said sealing lip (64) is made as one with the said support (14).

9. Device (10) according to Claim 8, **characterized in that** the said lip (64) is two-shot injection moulded in plastic on the said support (14).

## Patentansprüche

1. Karosserie-Dekorvorrichtung (10), insbesondere für ein Kraftfahrzeug, die auf einer im Wesentlichen ebenen Befestigungsfläche (68) befestigt werden kann, mit einem Dekorelement (12) und mit einem Träger (14), **gekennzeichnet durch** erste Schnellbefestigungsmittel des Dekorelements (12) auf dem Träger (14), wobei der Träger (14) auf einer im Wesentlichen ebenen Seite (42), die dazu bestimmt ist, der Befestigungsfläche (68) gegenüberzuliegen, zweite Schnellbefestigungsmittel des Trägers (14) auf der Befestigungsfläche (68) und eine Dichtungslippe (64) aufweist, die die zweiten Befestigungsmittel umgibt.

2. Vorrichtung (10) nach Anspruch 1, **dadurch gekennzeichnet, dass** das Dekorelement (12) eine Aufnahme (22) aufweist, die von einer Randleiste (20) begrenzt wird, in die der Träger (14) eingepresst werden kann.

3. Vorrichtung (10) nach Anspruch 2, **dadurch gekennzeichnet, dass** die Randleiste (20) Wölbungen (25) aufweist, die geeignet sind, mit elastischen Zungen (36) zusammenzuwirken, die auf dem Träger (14) ausgebildet sind und Wülste bilden.

4. Vorrichtung (10) nach einem der Ansprüche 1 bis 3, **dadurch gekennzeichnet, dass** das Dekorelement (12) Aussparungen (24) aufweist, die in der Randleiste (20) ausgespart sind, wobei der Träger (14) Ecken (26) aufweist, die ausgebildet sind, um in die Aussparungen (24) eingepresst zu werden.

5. Vorrichtung (10) nach einem der vorhergehenden Ansprüche, **dadurch gekennzeichnet, dass** der Träger (14) an der Befestigungsfläche (68) mittels mindestens eines elastischen Rückdrehsicherungsvorsprungs (44) befestigt ist, der geeignet ist, mit einem Durchgangsloch (66) zusammenzuwirken, das in der Befestigungsfläche (68) ausgespart ist.

6. Vorrichtung (10) nach Anspruch 5, **dadurch gekennzeichnet, dass** der Träger (14) vier elastische Rückdrehsicherungsvorsprünge (44) aufweist, die geeignet sind, je mit einem Durchgangsloch (66) zusammenzuwirken, das in der Befestigungsfläche (68) ausgespart ist.

7. Vorrichtung (10) nach einem der vorhergehenden Ansprüche, **dadurch gekennzeichnet, dass** der Träger (14) zwei elastische Zentrierzungen (62) aufweist, die geeignet sind, mit dem gleichen Durchgangsloch (70) zusammenzuwirken, das in der Befestigungsfläche (68) ausgespart ist.

8. Vorrichtung (10) nach einem der vorhergehenden Ansprüche, **dadurch gekennzeichnet, dass** die Dichtlippe (64) aus einem Stück mit dem Träger (14) hergestellt wird.

9. Vorrichtung (10) nach Anspruch 8, **dadurch gekennzeichnet, dass** die Lippe (64) durch Co-Formen von Kunststoff auf den Träger (14) gespritzt wird.
